# EUROPÄISCHE PATENTSCHRIFT

(11) **EP 2 193 290 B1**
(45) Veröffentlichungstag und Bekanntmachung des Hinweises auf die Patenterteilung: **12.10.2011**
(21) Anmeldenummer: 08803044.0
(22) Anmeldetag: 15.08.2008
(51) Int. Cl.: F16H 47/04

(54) **GETRIEBEVORRICHTUNG FÜR EIN FAHRZEUG**
TRANSMISSION DEVICE FOR A VEHICLE
DISPOSITIF DE TRANSMISSION POUR UN VÉHICULE

(30) Priorität: 02.10.2007 DE 102007047194; 16.07.2008 DE 102008040446
(43) Veröffentlichungstag der Anmeldung: 09.06.2010
(73) Patentinhaber: ZF Friedrichshafen AG, 88038 Friedrichshafen (DE)
(72) Erfinder: GRAD, Karl, 94161 Ruderting (DE); POHLENZ, Jürgen, 88214 Ravensburg (DE); BAILLY, Gerhard, 88046 Friedrichshafen (DE); RATZMANN, Thomas, 88074 Meckenbeuren (DE)
(86) Internationale Anmeldenummer: PCT/EP2008/060752
(87) Internationale Veröffentlichungsnummer: WO 2009/047032

(56) Entgegenhaltungen:
- WO-A-2006/042434
- US-A- 5 766 107
- US-A1- 2003 166 430

## Beschreibung

Die Erfindung betrifft eine Getriebevorrichtung für ein Fahrzeug gemäß der im Oberbegriff des Patentanspruches 1 näher definierten Art.

Ein hydrostatisch-mechanisches Traktorengetriebe mit einem stufenlosen hydrostatischen Antrieb ist aus der DE 10 2006 025 348 A1 bekannt. Der hydrostatische Antrieb weist eine von einem Verbrennungsmotor angetriebene hydrostatische Pumpe und einen von der Pumpe angetriebenen Hydromotor auf. Die Pumpe und der Hydromotor sind über ein einziges, gemeinsames Schwenkteil zwangsgekoppelt und derart verstellbar, dass die Pumpe zwischen einem minimalen Winkel und einem maximalen Winkel verschwenkbar ist, während zugleich der Motor synchron von einem maximalen Schwenkwinkel zu einem minimalen Winkel verschwenkt. Die Pumpe ist für eine einzige Förderrichtung des Volumenstroms ausgelegt. Ein mechanisches Bereichsgetriebe mit mehreren Schaltstufen, die über eine Kupplung schaltbar sind, ist nachgeschaltet.

Darüber hinaus ist aus der DE 19 52 966 A eine Getriebevorrichtung mit Leistungsverzweigung bekannt, welche einen Variator, einen Doppelplanetenradsatz und eine Schaltgetriebeeinrichtung zur Darstellung mehrerer Fahrbereiche umfasst. Die Pumpen- und die Motoreinrichtung des als Hydrostateinrichtung ausgeführten Variators sind über ein gemeinsames Joch verstellbar.

Die WO 2006/042434 A offenbart eine Getriebevorrichtung nach dem Oberbegriff des Hauptanspruchs.

Der vorliegenden Erfindung liegt die Aufgabe zu Grunde, die aus dem Stand der Technik bekannten Getriebevorrichtungen derart weiterzubilden, dass aus stoßartigen Belastungen, die beispielsweise beim Überfahren von

Fahrbahnunebenheiten, Schlaglöchern und dergleichen auftreten, resultierende und am Variator angreifende Stellkräfte, die ein unerwünschtes selbstständiges

Verstellen des Variators zur Folge haben, auf einfache und kostengünstige Art und Weise reduziert bzw. vermieden werden.

Erfindungsgemäß wird diese Aufgabe mit einer Getriebevorrichtung gemäß den Merkmalen des Patentanspruches 1 gelöst.

Die erfindungsgemäße Getriebevorrichtung für ein Fahrzeug ist mit einem als Hydrostateinrichtung in Schrägachsenbauweise ausgebildeten und wenigstens im Bereich einer Schwenkachse verstellbaren Variator, einer Planetengetriebeeinrichtung und einer Schaltgetriebeeinrichtung ausgebildet.

Erfindungsgemäß entspricht eine Orientierung der Schwenkachse des Variators in Einbaulage im Fahrzeug wenigstens annähernd der Orientierung einer Fahrzeughochachse, womit die aus stoßartigen Belastungen resultierenden und am Variator angreifenden Stellkräfte auf konstruktiv einfache und kostengünstige Art und Weise vermieden werden. Bei der Getriebevorrichtung nach der Erfindung ist die Verstellrichtung bzw. die Schwenkachse des Variators im Wesentlichen senkrecht zu der Wirkrichtung der aus den stoßartigen Belastungen resultierenden und am Variator im Betrieb angreifenden Kräften ausgerichtet, wodurch diese keine selbstständige Verstellung des Variators und damit der Gesamtübersetzung der Getriebevorrichtung bewirken.

Bei einer vorteilhaften Weiterbildung der Getriebevorrichtung nach der Erfindung ist der Variator in Einbaulage zwischen einer Antriebsmaschine des Fahrzeugs und der Planetengetriebeeinrichtung sowie der Schaltgetriebeeinrichtung angeordnet. Damit ist der Variator auf einfache Art und Weise durch Abziehen des Variators in Vorwärtsfahrtrichtung aus einem Fahrzeug ausbaubar, wenn seitlich keine Zugänglichkeit zum Getriebegehäuse besteht. Darüber hinaus ist der Variator auch einfach ausgehend von der Unterseite des Fahrzeuges bei entsprechender Zugänglichkeit ohne zusätzliches Demontieren von Fahrzeugteilen oder einem Kippen einer Fahrzeugkabine ausbaubar.

Der Variator ist in Einbaulage in Bezug auf eine Fahrtrichtung des Fahrzeuges bei einer weiteren vorteilhaften und durch eine in axialer Richtung geringeren Bauraumbedarf gekennzeichneten Ausführungsform neben der Planetengetriebeeinrichtung und/oder der Schaltgetriebeeinrichtung angeordnet, wobei der Variator bei entsprechender Zugänglichkeit durch seitliches Abziehen aus einer Steckverbindung oder von den Variator mit weiteren Getriebekomponenten verbindenden Verzahnungen auf einfache Art und Weise entnehmbar.

Bei in radialer Richtung jeweils einen geringen Bauraumbedarf aufweisenden Ausführungen der Getriebevorrichtung nach der Erfindung ist entweder der Variator zwischen dem Planetenradsatz und der Schaltgetriebeeinrichtung oder die Schaltgetriebeeinrichtung zwischen dem Planetenradsatz und dem Variator angeordnet.

Der Variator ist bei einer vorteilhaften Weiterbildung der Getriebevorrichtung nach der Erfindung im Bereich seiner ersten Welle und im Bereich seiner zweiten Welle über einen Winkeltrieb jeweils mit einer Welle der Planetengetriebeeinrichtung verbunden, womit der Variator in konstruktiv einfacher und kostengünstiger Art und Weise mit im Vergleich zu Stirnradverzahnungen mit kleineren Zahnrädern an den Leistungsfluss der Getriebevorrichtung anbindbar ist.

Ebenfalls konstruktiv einfach ausgeführte und kostengünstig herstellbare Ausführungsformen der erfindungsgemäßen Getriebevorrichtung sind entweder mit wenigstens einer als Konstanteinheit ausgeführten Motoreinrichtung und mindestens einer als Verstelleinheit ausgeführten Pumpeneinrichtung oder mit wenigstens einer als Konstanteinheit ausgeführten Pumpeneinrichtung und mindestens einer als Verstelleinheit ausgebildeten Motoreinrichtung ausgebildet.

Um die Übersetzungsbereiche der Getriebevorrichtung mit möglichst großer Spreizung darstellen zu können, ist eine vorteilhafte Ausführungsform der erfindungsgemäßen Getriebevorrichtung im Bereich des Variators mit als Verstelleinheiten ausgebildeten Motor- und Pumpeneinrichtungen versehen, wobei die Pumpeneinrichtung und die Motoreinrichtung in Abhängigkeit des jeweils vorliegenden Anwendungsfalles unabhängig voneinander verstellbar oder zur gemeinsamen Verstellung miteinander gekoppelt sind.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugszeichen verwendet werden.

Es zeigt:
- Fig. 1: ein Räderschema eines ersten Ausführungsbeispieles der erfindungsgemäßen Getriebevorrichtung;
- Fig. 2: eine schematisierte dreidimensionale Seitenansicht der Getriebevorrichtung gemäß Fig. 1;
- Fig. 3: ein Räderschema eines zweiten Ausführungsbeispieles der erfindungsgemäßen Getriebevorrichtung;
- Fig. 4: eine schematisierte dreidimensionale Seitenansicht der Getriebevorrichtung gemäß Fig. 3;
- Fig. 5: ein Räderschema eines dritten Ausführungsbeispieles der Getriebevorrichtung nach der Erfindung; und
- Fig. 6: ein Räderschema eines vierten Ausführungsbeispieles der Getriebevorrichtung nach der Erfindung.

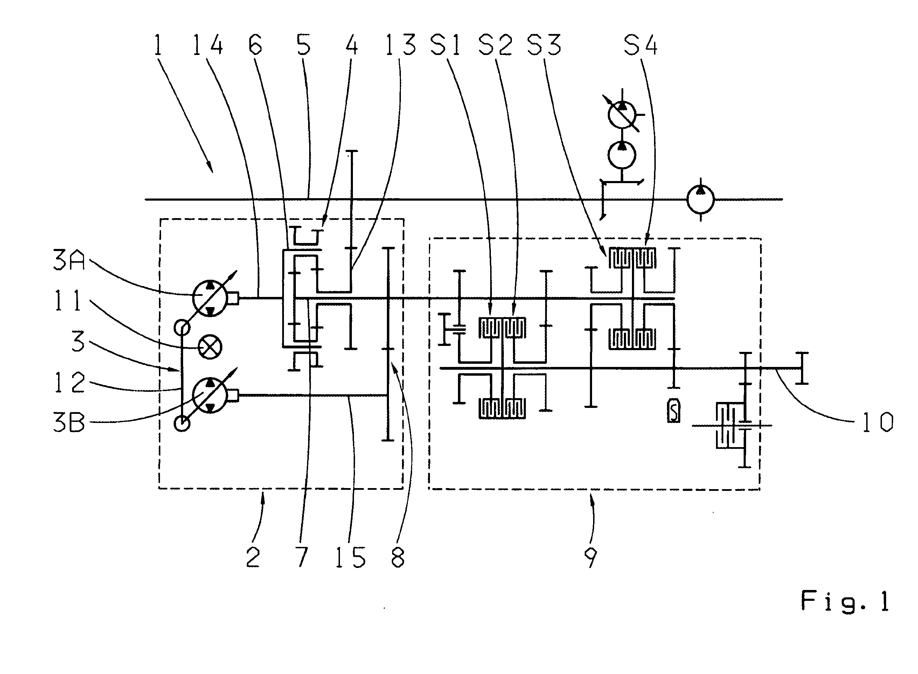

Fig. 1 zeigt ein Räderschema einer Getriebevorrichtung 1 mit stufenloser Übersetzungsverstellung, welches beispielsweise in landwirtschaftlichen Fahrzeugen einsetzbar ist. Über die Getriebevorrichtung 1 sind vorliegend drei Übersetzungsbereiche bzw. Fahrbereiche für Vorwärtsfahrt und ein Übersetzungsbereich für Rückwärtsfahrt darstellbar, innerhalb welchen die Übersetzung der Getriebevorrichtung stufenlos verstellbar ist.

Die stufenlose Verstellung der Getriebeübersetzung wird über einen stufenlosen Antriebssatz 2 ermöglicht, der einen Variator 3 und eine Planetengetriebeeinrichtung 4 umfasst. Mittels der Planetengetriebeeinrichtung 4 wird der nur begrenzt einstellbaren Drehzahl einer Getriebeantriebswelle 5, die mit einer Antriebsmaschine eines Fahrzeugs gekoppelt ist, die stufenlose Drehzahlverstellbarkeit des Variators 3 überlagert. Als Ergebnis dieser Überlagerung stehen im Bereich der Planetengetriebeeinrichtung 4 zwei Wellen 6, 7 der Planetengetriebeeinrichtung 4 mit stufenlos veränderbarer Drehzahl zur Verfügung, wobei die erste Welle 6 als Planetenträger der Planetengetriebeeinrichtung 4 ausgeführt ist und mit einer verstellbaren Pumpeneinrichtung 3A des Variators 3 gekoppelt ist. Die zweite Welle 7 ist ein Sonnenrad der Planetengetriebeeinrichtung 4, welche über eine Stirnradverzahnung 8 mit einer verstellbaren Motoreinrichtung 3B des Variators 3 in Wirkverbindung steht. Die Pumpeneinrichtung 3A und die Motoreinrichtung 3B des als Hydrostateinrichtung ausgeführten Variators 3 sind jeweils in Schrägachsenbauweise ausgebildet und im Bereich einer Schwenkachse 11 über ein gemeinsames Joch 12 verschwenkbar.

Der stufenlose Antriebssatz 2 ist mit einer Schaltgetriebeeinrichtung 9 gekoppelt, die in Abhängigkeit der Leistungsfähigkeit des Variators 5 und auch in Abhängigkeit der konstruktiven Ausgestaltung der Planetengetriebeeinrichtung 4 ausgebildet ist. Über die Schaltgetriebeeinrichtung 9 erfolgt die Leistungsübertragung vom stufenlosen Antriebssatz 2 in Richtung einer Getriebeabtriebswelle 10. Darüber hinaus werden im Bereich der Schaltgetriebeeinrichtung 9 die geforderten Abtriebsdrehzahlen in den verschiedenen Übersetzungsbereichen dargestellt.

Die Schaltgetriebeeinrichtung 9 ist mit vier reibschlüssigen Schaltelementen S1 bis S4 ausgestaltet, wobei bei geschlossenem ersten Schaltelement S1 der Fahrbereich für Rückwärtsfahrt in der Getriebevorrichtung 1 eingelegt ist. Die Schaltelemente S2 bis S4 sind zur Darstellung der drei Fahrbereiche für Vorwärtsfahrt vorgesehen.

Ein zweites Sonnenrad 13 der Planetengetriebeeinrichtung 4 ist mit der Getriebeantriebswelle 5 verbunden. Die Variatorwellen 14 und 15 sind somit jeweils an eine Welle 6, 7 der Planetengetriebeeinrichtung 4 gekoppelt, die keine direkte Verbindung mit der Getriebeantriebswelle 5 aufweisen. Darüber hinaus sind die Variatorwellen 14 und 15 achsparallel zu den Wellen 6, 7 der Planetengetriebeeinrichtung 4 angeordnet.

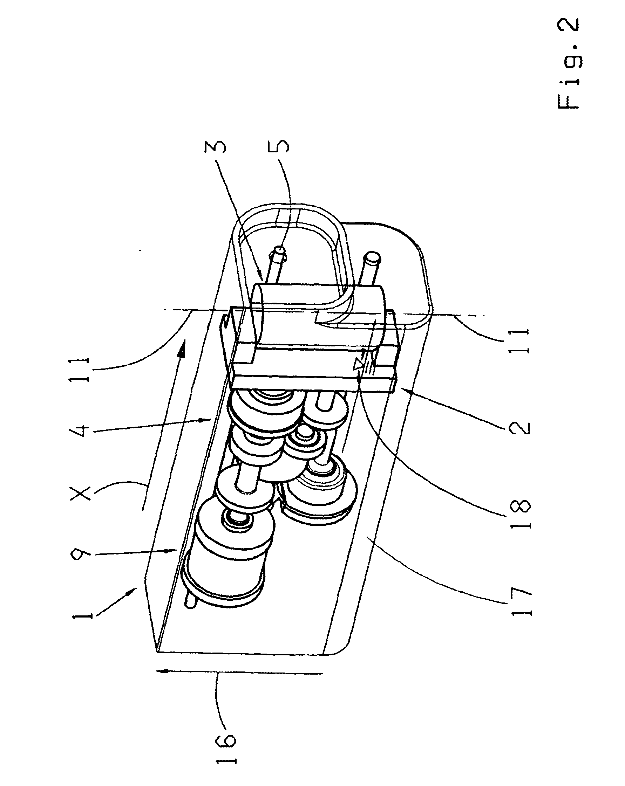

Um den Variator 3 zumindest kurzzeitig selbstständig verstellende und am Joch 12 des Variators 3 angreifende Stellkräfte zu vermeiden, die durch stoßartige Belastungen, wie beispielsweise beim Überfahren von Fahrbahnunebenheiten, Schlaglöchern und dergleichen verursacht werden, entspricht eine Orientierung der Schwenkachse 11 des Variators 3 in der in Fig. 2 dargestellten Einbaulage im Fahrzeug wenigstens annähernd der Orientierung einer Fahrzeughochachse 16. Damit ist die Wirkrichtung der betriebsbedingt am Variator angreifenden Kräfte im Wesentlichen senkrecht zur Schwenkachse 11 des Variators 3 ausgerichtet, weshalb die Kräfte den Variator 3 bzw. dessen Pumpeneinrichtung 3A bzw. dessen Motoreinrichtung 3B nicht verstellen.

Zusätzlich ist der Variator 3 in Vorwärtsfahrtrichtung des Fahrzeuges, die durch den Pfeil X in Fig. 2 näher gekennzeichnet ist, vor der Planetengetriebeeinrichtung 4 und der Schaltgetriebeeinrichtung 9 angeordnet. Die Getriebevorrichtung 1 ist einerseits in radialer Richtung durch einen geringen Bauraumbedarf und andererseits durch eine größere axiale Länge gekennzeichnet. Zudem ist der Variator 3 aufgrund seiner in Vorwärtsfahrtrichtung X vordere Anordnung einfach zu demontieren, wobei der Variator 3 in Abhängigkeit der jeweiligen Ausführung des Fahrzeuges in Bezug auf eine Fahrzeugvorderachse nach vorne, in Bezug auf eine Fahrzeugoberseite nach unten oder in Richtung der Fahrzeughochachse 16 nach oben aus einem Fahrzeugrahmen 17 entnehmbar ist, der neben weiteren Fahrzeugkomponenten den für die Getriebevorrichtung 1 zur Verfügung stehenden Bauraum im Fahrzeug begrenzt.

Ist der Variator 3 wie im vorliegenden Fall zumindest bereichsweise unterhalb eines Ölstandes 18 der Getriebevorrichtung 1 angeordnet, ist der Variator 3 durch geeignete Schotteinrichtungen von dem in einem nicht näher dargestellten Ölsumpf der Getriebevorrichtung 1 angeordneten Hydraulikfluid abzuschotten, um im Betrieb der Getriebevorrichtung 1 sogenannte Planschverluste und somit eine Beeinträchtigung des Gesamtwirkungsgrades der Getriebevorrichtung 1 auf einfache Art und Weise zu vermeiden.

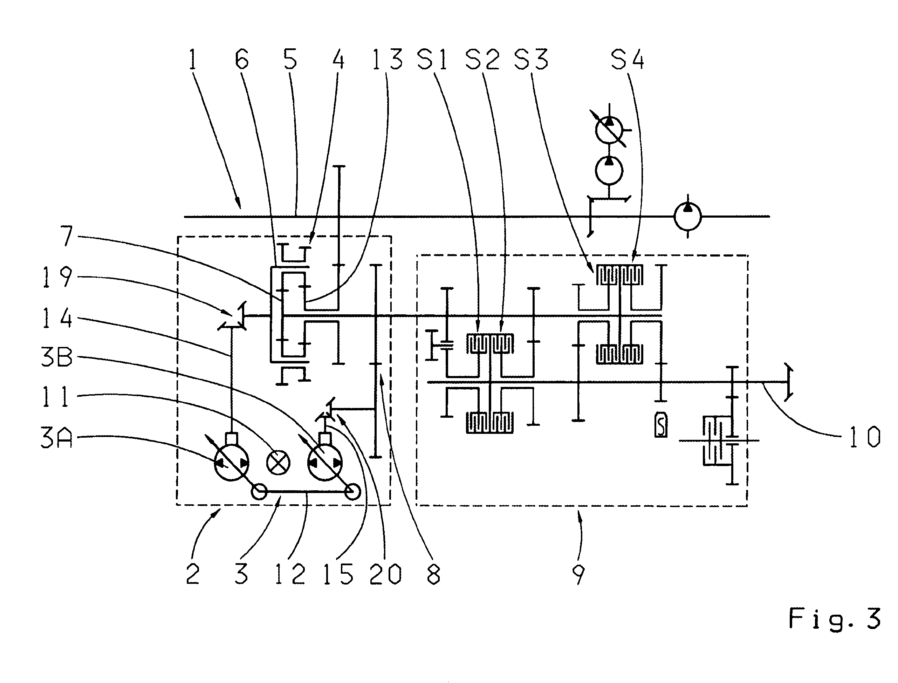

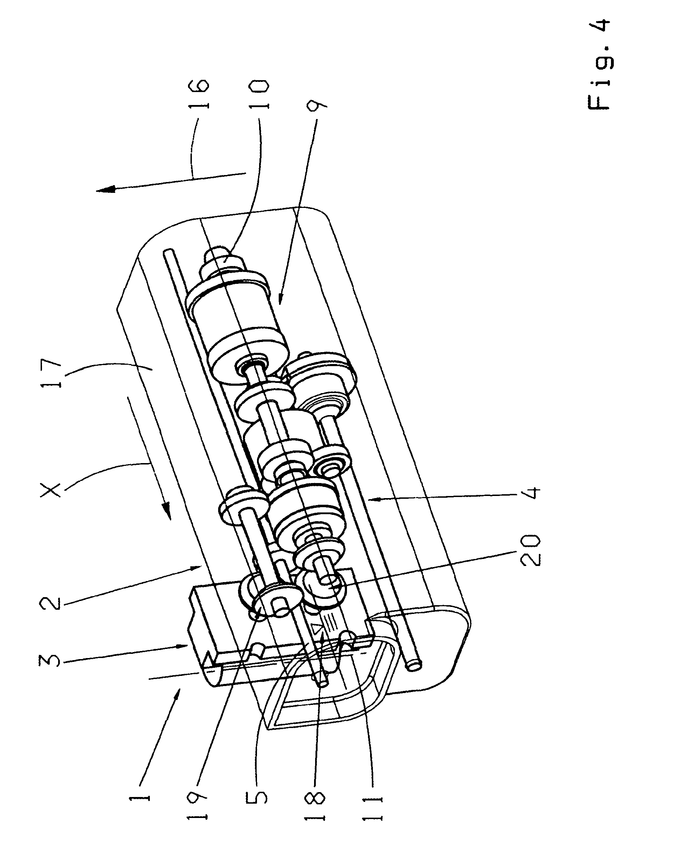

In Fig. 3 ist ein Räderschema eines zweiten Ausführungsbeispieles der Getriebevorrichtung 1 dargestellt, bei welcher die beiden Variatorwellen 14 und 15 jeweils über sogenannte Winkeltriebe 19 und 20 mit den Wellen 6 und 7 der Planetengetriebeeinrichtung 4 verbunden sind, wobei die Winkeltriebe 19, 20 jeweils durch miteinander kämmende Kegelräder bzw. Kegelradverzahnungen gebildet sind. Die Variatorwellen 14 und 15 sind rechtwinklig zu den Wellen 6 und 7 der Planetengetriebeeinrichtung 4 angeordnet. Die Anbindung des Variators 3 über die beiden Winkeltriebe 19 und 20 an die Planetengetriebeeinrichtung 4 bietet auf einfache Art und Weise die Möglichkeit, den Variator 3 in der in Fig. 4 dargestellten Position neben der Planetengetriebeeinrichtung 4 mit vertikaler Orientierung der Schwenkachse 11 des Variators 3 anzuordnen. Somit werden auch bei dem zweiten Ausführungsbeispiel der Getriebevorrichtung 1 auf das Joch 12 durch stoßartige Belastungen wirkende Stellkräfte und somit ein selbstständiges Verstellen des Variators 3 vermieden.

Im Vergleich zu dem in Fig. 1 und Fig. 2 dargestellten ersten Ausführungsbeispiel, bei welchen der Variator 3 über Stirnradverzahnungen mit dem den Wellen 6, 7 der Planetengetriebeeinrichtung 4 angebunden ist, weist das zweite Ausführungsbeispiel der Getriebevorrichtung 1 einen geringeren axialen Bauraumbedarf auf. Zusätzlich ist der Variator 3 während einer Demontage mit geringem Aufwand seitlich aus einer Steckverbindung und den Kegelradverzahnungen der Winkeltriebe 19 und 20 abziehbar ohne zuvor weitere Fahrzeugkomponenten demontieren zu müssen.

In Abhängigkeit des jeweils vorliegenden Anwendungsfalles besteht jedoch auch die Möglichkeit, den Variator in der in Fig. 1 und Fig. 2 dargestellten Anordnung über Winkeltriebe mit der Planetengetriebeeinrichtung zu verbinden.

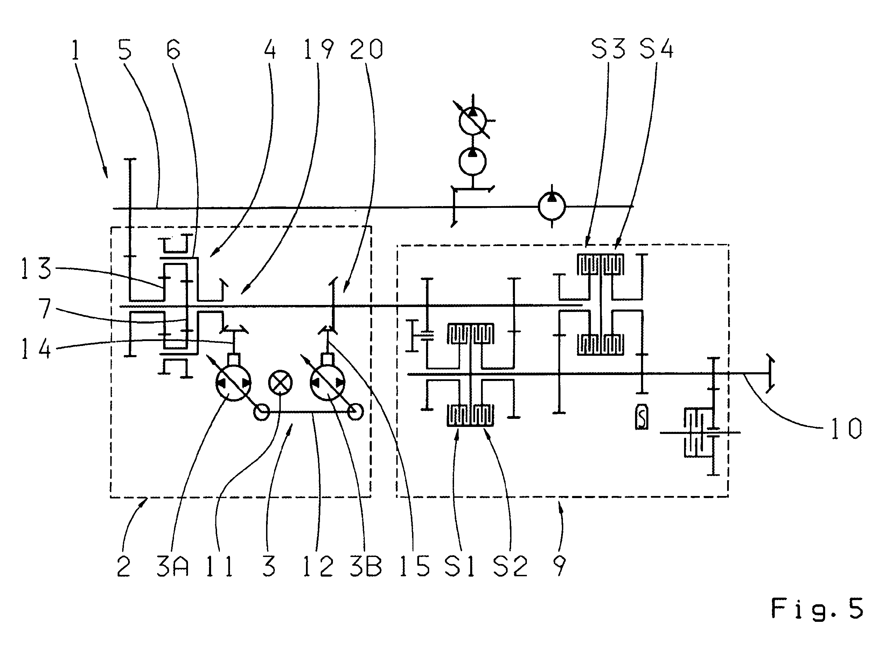

Da die zweite Ausführungsform der Getriebevorrichtung 1 in radialer Richtung unter Umständen einen zu großen Bauraumbedarf aufweist, ist der Variator zur Verringerung des radialen Bauraumbedarfes der Getriebevorrichtung 1 bei dem in Fig. 5 dargestellten dritten Ausführungsbeispiel räumlich zwischen der Planetengetriebeeinrichtung 4 und der Schaltgetriebeeinrichtung 9 angeordnet. Der dadurch verlängerte axiale Bauraumbedarf der Getriebevorrichtung 1 steht im Bereich des Antriebsstranges von landwirtschaftlichen Maschinen meistens zur Verfügung, während der zur Verfügung stehende Bauraum in radialer Richtung oftmals begrenzt ist, so dass die vorbeschriebene Anordnung des Variators 3 neben der Planetengetriebeeinrichtung und/oder der Schaltgetriebeeinrichtung 9 nicht möglich ist.

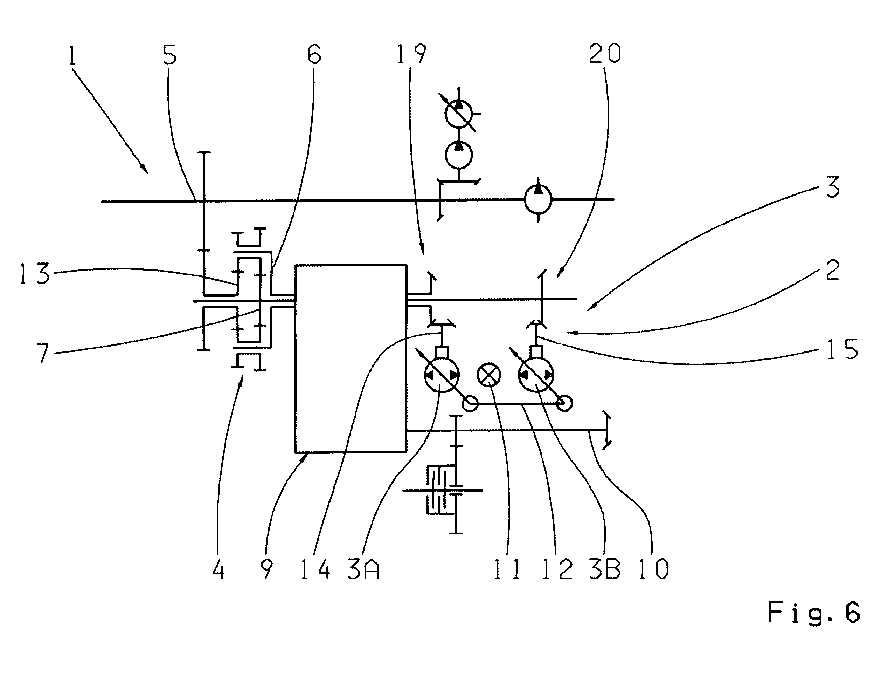

Alternativ hierzu ist der Variator 3 bei dem in Fig. 6 dargestellten vierten Ausführungsbeispiel der Getriebevorrichtung 1 in Vorwärtsfahrtrichtung X räumlich hinter der Schaltgetriebeeinrichtung 9 positioniert, so dass die Schaltgetriebeeinrichtung 9 zwischen dem Planetenradsatz 4 und dem Variator 3 angeordnet ist und die Getriebevorrichtung 1 in radialer Richtung einen geringeren Bauraumbedarf aufweist.

### Bezugszeichen

- 1: Getriebevorrichtung
- 2: stufenloser Antriebssatz
- 3: Variator
- 3A: Pumpeneinrichtung
- 3B: Motoreinrichtung
- 4: Planetengetriebeeinrichtung
- 5: Getriebeantriebswelle
- 6: Welle, Planetenträger
- 7: Welle, Sonnenrad
- 8: Stirnradverzahnung
- 9: Schaltgetriebeeinrichtung
- 10: Getriebeabtriebswelle
- 11: Schwenkachse
- 12: Joch
- 13: zweites Sonnenrad
- 14, 15: Variatorwelle
- 16: Fahrzeughochachse
- 17: Fahrzeugrahmen
- 18: Ölstand
- 19, 20: Winkeltrieb
- S1 bis S4: Schaltelement
- X: Vorwärtsfahrtrichtung

## Patentansprüche

1. Getriebevorrichtung (1) für ein Fahrzeug mit einem als Hydrostateinrichtung in Schrägachsenbauweise ausgebildeten und wenigstens im Bereich einer Schwenkachse (11) verstellbaren Variator (3), einer Planetengetriebeeinrichtung (4) und einer Schaltgetriebeeinrichtung (9), wobei eine Orientierung der Schwenkachse (11) des Variators (3) in Einbaulage im Fahrzeug wenigstens annähernd der Orientierung einer Fahrzeughochachse (16) entspricht, **dadurch gekennzeichnet, dass** die Pumpeneinrichtung (3A) und die Motoreinrichtung (3B) zur gemeinsamen Verstellung miteinander gekoppelt sind.

2. Getriebevorrichtung nach Anspruch 1, **dadurch gekennzeichnet, dass** der Variator (3) in Einbaulage räumlich zwischen einer Antriebsmaschine des Fahrzeuges und der Planetengetriebeeinrichtung (4) sowie der Schaltgetriebeeinrichtung (9) angeordnet ist.

3. Getriebevorrichtung nach Anspruch 1, **dadurch gekennzeichnet, dass** der Variator (3) räumlich zwischen der Planentengetriebeeinrichtung (4) und der Schaltgetriebeeinrichtung (9) angeordnet ist.

4. Getriebevorrichtung nach Anspruch 1, **dadurch gekennzeichnet, dass** die Schaltgetriebeeinrichtung räumlich zwischen der Planetengetriebeeinrichtung (4) und dem Variator (3) angeordnet ist.

5. Getriebevorrichtung nach einem der Ansprüche 1 bis 4, **dadurch gekennzeichnet, dass** der Variator (3) in Einbaulage in Bezug auf eine Fahrtrichtung des Fahrzeuges räumlich neben der Planetengetriebeeinrichtung (4) und/oder der Schaltgetriebeeinrichtung (9) angeordnet ist.

6. Getriebevorrichtung nach einem der Ansprüche 1 bis 5, **dadurch gekennzeichnet, dass** der Variator (3) im Bereich einer ersten Welle (14) und im Bereich einer zweiten Welle (15) über einen Winkeltrieb (18, 19) jeweils mit einer Welle der Planetengetriebeeinrichtung verbunden ist

## Claims

1. Transmission device (1) for a vehicle having a variator (3) which is designed as a hydrostatic device of oblique axis type and which is adjustable at least in the region of a pivot axis (11), having a planetary gearing unit (4) and having a shift transmission unit (9), wherein an orientation of the pivot axis (11) of the variator (3) in the installed position in the vehicle corresponds at least approximately to the orientation of a vehicle vertical axis (16), **characterized in that** the pump unit (3A) and the motor unit (3B) are coupled to one another for common adjustment.

2. Transmission device according to Claim 1, **characterized in that** the variator (3), in the installed position, is arranged spatially between a drive engine of the vehicle and the planetary gearing unit (4) and also the shift transmission unit (9).

3. Transmission device according to Claim 1, **characterized in that** the variator (3) is arranged spatially between the planetary gearing unit (4) and the shift transmission unit (9).

4. Transmission device according to Claim 1, **characterized in that** the shift transmission unit is arranged spatially between the planetary gearing unit (4) and the variator (3).

5. Transmission device according to one of Claims 1 to 4, **characterized in that** the variator (3), in the installed position, is arranged spatially adjacent to the planetary gearing unit (4) and/or the shift transmission unit (9) in relation to a direction of travel of the vehicle.

6. Transmission device according to one of Claims 1 to 5, **characterized in that** the variator (3) is connected, in the region of a first shaft (14) and in the region of a second shaft (15), via a bevel gearing (18, 19) in each case to one shaft of the planetary gearing unit.

## Revendications

1. Dispositif de transmission (1) pour un véhicule comprenant un variateur (3) réalisé sous forme de système hydrostatique de construction à axe oblique, et réglable au moins dans la région d'un axe de pivotement (11), un système de transmission planétaire (4) et un système de transmission à changement de vitesse (9), une orientation de l'axe de pivotement (11) du variateur (3) dans la position installée dans le véhicule correspondant au moins approximativement à l'orientation d'un axe vertical (16) du véhicule, **caractérisé en ce que** le système de pompe (3A) et le système de moteur (3B) sont accouplés l'un à l'autre en vue d'un réglage commun.

2. Dispositif de transmission selon la revendication 1, **caractérisé en ce que** le variateur (3), dans la position installée, est disposé spatialement entre une machine d'entraînement du véhicule et le système de transmission planétaire (4) ainsi que le système de transmission à changement de vitesse (9).

3. Dispositif de transmission selon la revendication 1, **caractérisé en ce que** le variateur (3) est disposé spatialement entre le système de transmission planétaire (4) et le système de transmission à changement de vitesse (9).

4. Dispositif de transmission selon la revendication 1, **caractérisé en ce que** le système de transmission à changement de vitesse est disposé spatialement entre le système de transmission planétaire (4) et le variateur (3).

5. Dispositif de transmission selon l'une quelconque des revendications 1 à 4, **caractérisé en ce que** le variateur (3), dans la position installée, est disposé par rapport à une direction de conduite du véhicule, spatialement à côté du système de transmission planétaire (4) et/ou du système de transmission à changement de vitesse (9).

6. Dispositif de transmission selon l'une quelconque des revendications 1 à 5, **caractérisé en ce que** le variateur (3), dans la région d'un premier arbre (14) et dans la région d'un deuxième arbre (15), est à chaque fois connecté à un arbre du système de transmission planétaire par le biais d'un entraînement angulaire (18, 19).
